# EUROPÄISCHE PATENTSCHRIFT

(11) **EP 1 142 948 B1**
(45) Veröffentlichungstag und Bekanntmachung des Hinweises auf die Patenterteilung: **28.09.2005**
(21) Anmeldenummer: 01106662.8
(22) Anmeldetag: 16.03.2001
(51) Int. Cl.: C08K 5/548, C08K 5/54, C08L 21/00

(54) **Kautschukmischungen**
Rubber compositions
Compositions de caoutchouc

(30) Priorität: 28.03.2000 DE 10015309
(43) Veröffentlichungstag der Anmeldung: 10.10.2001
(73) Patentinhaber: Degussa AG, 40474 Düsseldorf (DE)
(72) Erfinder: Luginsland, Hans-Detlef, Dr., 50968 Köln (DE); Hasse, Andre, 52441 Linnich (DE)

(56) Entgegenhaltungen:
- EP-A- 0 784 072
- US-A- 4 474 908

## Beschreibung

Die Erfindung betrifft Kautschukmischungen, ein Verfahren zu deren Herstellung und deren Verwendung.

Es ist bekannt, dass hydrolysierbare organofunktionalisierte Silane, die die Fähigkeit besitzen mit Hydroxylgruppen enthaltenden Füllstoffen, wie zum Beispiel natürlichen und synthetischen Silicaten, Carbonaten, Gläsern und Metalloxiden, zu reagieren, in vielen Anwendungsgebieten zur Oberflächenmodifizierung oder Haftvermittlung Verwendung finden. In der kautschukverarbeitenden Industrie werden Organopolysulfansilanen (D 21 41 159) als Haftvermittler zwischen Füllstoff und Kautschuk (D 22 55 577) verwendet. Der bekannteste Vertreter dieser Substanzklasse ist das Bis-triethoxysilylpropyltetrasulfan, bekannt unter dem Handelsnamen Si 69 der Degussa-Hüls AG. Solche organofunktionalisierte Silane werden entweder als vormodifizierte Füllstoffe verwendet (D 34 37 473) oder aber die Oberfläche des silikatischen Füllstoff mit dem flüssigen Silan während der Mischungsherstellung in-situ modifiziert. Die flüssigen organofunktionellen Silane werden auch als feste, trägerfixierte Abmischungen für die Kautschuktechnologie verwendet. Durch den Aufbau einer chemischen Bindung zwischen dem silikatischen Füllstoff und der Kautschukmatrix werden gute gummitechnische Eigenschaften, wie zum Beispiel hohe Spannungswerte, hohe Abriebswiderstände und niedrige Hystereseverluste, erzielt. Die zusätzliche Hydrophobierungswirkung des Silans äußert sich insbesondere in niedrigen Mischungsviskositäten, die die Verarbeitung der Gummimischung ermöglicht.

Die Verwendung von mercaptofunktionalisierten Organosilanen gemäß der Formel R¹R²R³Si-R⁴-S-H, wobei R¹, R², R³ gleich oder unabhängig voneinander sein können: C₁ bis C₄ Alkyl, C₁ bis C₄ Alkoxy, bevorzugt R¹=R²=R³= Methoxy oder Ethoxy, R⁴ kann C₁ bis C₆ linear oder verzweigtes Alklyliden sein, bevorzugt Propyl, für Kautschukmischungen ist aus US 3 350 345 und F 2 094 859 bekannt.

Die mercaptofunktionalisierten Organosilane zeigen gegenüber den oben beschriebenen Organopolysulfansilanen eine höhere Kopplungseffektivität und können dadurch in einer deutlich geringeren Dosierung verwendet werden. Es ist bekannt, dass die Verwendung dieser Silane aufgrund ihrer sehr hohen Scorch-Empfindlichkeit (Anvulkanisation) und folglich erschwerten Verarbeitbarkeit in der Kautschuktechnologie nur eine untergeordnete Rolle spielt (US 4 002 594).

Die hohe Scorch-Empfindlichkeit dieser Silane kann durch die Einführung sogenannter Schutzgruppen für die Mercaptofunktion deutlich verbessert und so eine sichere Verarbeitung gewährleistet werden (D 2 035 778, WO 99/09036). Die Einführung solcher Schutzgruppen senkt nicht nur die Scorch-Empfindlichkeit, sondern auch die Kopplungsausbeute, was mit einer höheren Dosierung kompensiert werden muss. Dies ist aufgrund der hohen Preise solcher Silane unerwünscht.

EP 784 072 beschreibt die Verwendung einer Kombination aus dem Mercaptosilan und einem kurzkettigen funktionalisierten Silikonöl. Dabei wird die Mercaptosilanfunktion derart abgeschirmt, dass die Scorch-Empfindlichkeit deutlich reduziert wird. Zudem besitzt das Silikonöl eine hydrophobierende Wirkung, was die Verarbeitbarkeit dieser Mischungen verbessert. Nachteilig bei diesem Verfahren sind die begrenzte Verfügbarkeit und die hohen Kosten für die funktionalisierten Silikonöle.

Ferner ist aus US 4 474 908 die Verwendung von Mercaptosilan in Kombination mit einem kurzkettigen Alkylsilan, bevorzugt Methyltrimethoxysilan, bekannt. In dieser Kombination werden zwar verbesserte Vulkanisatdaten erhalten, nachteilig ist aber das schlechte Anvulkanisationsverhalten und die Verarbeitbarkeit.

Aufgabe der vorliegenden Erfindung ist es eine Kautschukmischung zur Verfügung zu stellen, die ein hervorragendes Verarbeitungsverhalten (niedrige Viskosität, lange Scorch-Zeiten) und außerordentliche Vulkanisatdaten (z.B. hohes Verstärkungsverhältnis 300%/100% und niedriger Hystereseverlust) aufweist.

Gegenstand der Erfindung ist eine Kautschukmischung, welche dadurch gekennzeichnet ist, daß diese enthält
(a) einen Kautschuk oder eine Mischung von Kautschuken,
(b) einen silikatischen Füllstoff,
(c) ein Organosilan der allgemeinen Formel (I)

   R¹R²R³Si-R⁴-SH (I)

   wobei R¹, R², R³ Ethoxygruppen sind,
   R⁴ eine Propylgruppe ist,
   und
(d) ein Alkylsilan der allgemeinen Formel (II)

   R¹R²R³Si-R⁵ (II)
wobei R¹, R², R³ die Bedeutung wie in Formel I haben, R⁵ eine Hexadecyl gruppe ist,
und das Mengenverhältnis Alkylsilan der allgemeinen Formel (II) zur Organosilan der allgemeinen Formel (I) 1,5-2,7 ist.

Als Kautschuk können Naturkautschuk und/oder Synthesekautschuke verwendet werden. Bevorzugte Synthesekautschuke sind beispielsweise bei W. Hofmann, Kautschuktechnologie, Genter Verlag, Stuttgart 1980, beschrieben. Sie können unter anderem
- Polybutadien (BR)
- Polyisopren (IR)
- Styrol/Butadien-Copolymerisate mit Styrolgehalten von 1 bis 60, vorzugsweise 5 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- Ethylen/Propylen/Dien-Copolymerisate (EPDM)
sowie Mischungen dieser Kautschuke umfassen.

In einer bevorzugten Ausführungsform können die Kautschuke schwefelvulkanisierbar sein.

Als silikatische Füllstoffe können gefällte Kieselsäuren eingesetzt werden.

Die Kautschukmischungen können 10 bis 150 Gew.-Teile silikatischen Füllstoff, 0,02 bis 4 Gew.-Teile Organosilan der Formel I und 0,02 bis 10 Gew.-Teile Alkylsilan der Formel II enthalten, wobei die Gew.-Teile auf 100 Gew.-Teile Kautschuk bezogen sind.

Das Organosilan der Formel I kann in einer Menge von 1 bis 4 Gew.-% und das Alkylsilan der Formel II in einer Menge von 1 bis 6 Gew.-%, bezogen auf die Menge des eingesetzten Füllstoffs, eingesetzt werden.

Die erfindungsgemäßen Kautschukmischungen können Ruße, beispielsweise Furnaceruß, Gasruß, Channelruß, Flammruß, Thermalruß, Acetylenruß, Plasmaruß, Inversionsruße, bekannt aus DE 195 21 565, Si-haltige Ruße, bekannt aus WO 98/45361 oder DE 196 13 796, oder metallhaltige Ruße, bekannt aus WO 98/42778, Lichtbogenruß und Ruße, die Nebenprodukte chemischer Produktionsprozesse sind, enthalten. Der Ruß kann durch vorgelagerte Reaktionen aktiviert werden.

Die erfindungsgemäßen Kautschukmischungen können weitere bekannte Kautschukhilfsmittel enthalten wie zum Beispiel Vernetzer, Vulkisationsbeschleuniger, Reaktionsbeschleuniger, -verzögerer, Alterungsschutzmittel, Stabilisatoren, Verarbeitungshilfsmittel, Weichmacher, Wachse, Metalloxide sowie Aktivatoren, wie Triethanolamin, Polyethylenglykol, Hexantriol.

Die Kautschukhilfsmittel können in üblichen Mengen, die sich unter anderem nach dem Verwendungszweck richten, eingesetzt werden. Übliche Mengen sind zum Beispiel Mengen von 0,1 bis 50 Gew.-%, bezogen auf Kautschuk.

Als Vernetzer können Schwefel oder organische Schwefelspender dienen.

Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel können in Mengen von 0,1 bis 10 Gew.-%, bevorzugt 0,1 bis 5 Gew.-%, bezogen auf den eingesetzten Kautschuk, eingesetzt werden.

Ein weiterer Gegenstand der Erfindung ist ein Verfahren zur Herstellung der erfindungsgemäßen Kautschukmischungen, welches dadurch gekennzeichnet ist, daß man den Kautschuk oder die Mischung von Kautschuken, die Silane gemäß den Formeln I und II und den silikatischen Füllstoff in einem Mischaggregat mischt und die Silane gemäß den Formeln I und II zusammen oder getrennt nacheinander zugibt.

Die Abmischung der Kautschuke mit dem Füllstoff, gegebenenfalls Kautschukhilfsmitteln und der Organosilane kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, die Organosilane und die Kautschukhilfsmittel bei 100 bis 170°C eingemischt werden. Dabei kann sich die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40-110°C mit den Vernetzungschemikalien versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischungen kann bei Temperaturen von 80 bis 200°C, bevorzugt 130 bis 180 °C, gegebenenfalls unter Druck von 10 bis 200 bar erfolgen.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen verwendet werden.

Ein weiterer Gegenstand der Erfindung sind Formkörper erhältlich aus der erfindungsgemäßen Kautschukmischung durch Vulkanisation.

Die erfindungsgemäßen Kautschukmischungen weisen den Vorteil auf, dass die langkettigen Alkylsilane die Mercaptofunktion derart effektiv abgeschirmen, dass die Anvulkanisationszeit deutlich verlängert ist, die Kopplungseffektivität des Mercaptosilans aber nicht herabgesetzt wird. Dadurch kann die benötigte Menge an Mercaptosilan deutlich niedriger angesetzt werden als für die üblichen Organopolysulfansilane. Zudem bewirkt die Verwendung des langkettigen Alkylsilans eine sehr gute Hydrophobierung der Füllstoffoberfläche, was sich in niedrigen Mischungsviskositäten und somit einer sehr guten Verarbeitbarkeit äußert.

### Beispiel 1

Die für die Kautschukmischungen verwendete Rezeptur ist in der Tabelle 1 angegeben. Dabei bedeutet die Einheit phr Gewichtsanteile bezogen auf 100 Teile des eingesetzten Rohkautschuks. Das allgemeine Verfahren zur Herstellung von Kautschukmischungen und deren Vulkanisate ist in dem folgenden Buch beschrieben: "Rubber Technology Handbook", W. Hofmann, Hanser Verlag 1994.

**Tabelle 1**

| Substanz | Bsp. [phr] |
|---|---|
| **1. Stufe** | |
| Buna VSL 5025-1 | 96 |
| Buna CB 24 | 30 |
| Ultrasil 7000 GR | 80 |
| ZnO | 3 |
| Stearinsäure | 2 |
| Naftolen ZD | 10 |
| Vulkanox 4020 | 1,5 |
| Protector G35P | 1 |
| Silane gemäß Bsp. | Variabel |

| **2. Stufe** | |
|---|---|
| Batch Stufe 1 | |

| **3. Stufe** | |
|---|---|
| Batch Stufe 2 | |
| Vulkacit D | 1 |
| Vulkacit CZ | 1,5 |
| Schwefel | Variabel |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Von dem Butadien sind 73 % 1,2, 10 % cis 1,4 und 17 % trans 1,4 verknüpft. Das Copolymer enthält 37,5 phr Öl und weist eine Mooney-Viskosität (ML 1+4/100°C) von 50 ±4 auf.

Bei dem Polymer Buna CB 24 handelt es sich um ein cis 1,4-Polybutadien (Neodymtyp) der Bayer AG mit einem cis 1,4-Gehalt von 97 %, einem trans 1,4-Gehalt von 2 %, einem 1,2-Gehalt von 1 % und einer Mooney-Viskosität von 44 ±5.

Als aromatisches Öl wird Naftolen ZD der Chemetall verwendet; bei Vulkanox 4020 handelt es sich um 6PPD der Bayer AG und Protektor G35P ist ein Ozonschutzwachs der HB-Fuller GmbH. Vulkacit D (DPG) und Vulkacit CZ (CBS) sind Handelsprodukte der Bayer AG.

Ultrasil 7000 GR ist eine gut dispergierbare gefällte Kieselsäure der Degussa-Hüls AG mit einer BET Oberfläche von 175 m²/g. Die Silane Si 69 (Bis-triethoxysilylpropyltetrasulfan) und Si 216 (Hexadecyltriethoxysilan), Silan gemäß der Formel II, sind Handelsprodukte der Degussa-Hüls AG. Das MPTES (3-Mercapropropyltriethoxysilan), gemäß der Formel I, ist von Gelest/ABCR.

Die Kautschukmischungen werden in einem Innenmischer entsprechend der Mischvorschrift in Tabelle 2 hergestellt.

**Tabelle 2**

| **Stufe 1** | |
|---|---|
| **Einstellungen** | |
| Mischaggregat | Werner & Pfleiderer E-Typ |
| Drehzahl | 60 min ⁻¹ |
| Stempeldruck | 5,5 bar |
| Leervolumen | 1,58 L |
| Füllgrad | 0,56 |
| Durchflußtemp. | 70 °C |

| **Mischvorgang** | |
|---|---|
| 0 bis 1 min | Buna VSL 5025-1 + Buna CB 24 |
| 1 bis 3 min | 1/2 Kieselsäure, ZnO, Stearinsäure, Naftolen ZD, Silane |
| 3 bis 4 min | 1/2 Kieselsäure, Alterungsschutz |
| 4 min | Säubern |
| 4 bis 5 min | Mischen |
| 5 min | Säubern |
| 5 bis 6 min | Mischen und ausfahren |
| | |
| Batch-Temp. | 145-150°C |
| Lagerung | 24 h bei Raumtemperatur |
| **Stufe 2** | |

| **Einstellungen** | |
|---|---|
| Mischaggregat | Wie in Stufe 1 bis auf: |
| Drehzahl | 80 min ⁻¹ |
| Durchflußtemp. | 80 °C |
| Füllgrad | 0,53 |

| **Mischvorgang** | |
|---|---|
| 0 bis 2 min | Batch Stufe 1 aufbrechen |
| 2 bis 5 min | Batchtemperatur 150°C durch Drehzahlvariation halten |
| 5 min | Ausfahren |
| | |
| Batch-Temp. | 150°C |
| Lagerung | 4 h bei Raumtemperatur |

| **Stufe 3** | |
|---|---|
| **Einstellungen** | |
| Mischaggregat | Wie in Stufe 1 bis auf |
| Drehzahl | 40 min ⁻¹ |
| Füllgrad | 0,51 |
| Durchflußtemp. | 50 °C |

| **Mischvorgang** | |
|---|---|
| 0 bis 2 min | Batch Stufe 2, Beschleuniger, Schwefel |
| 2 min | Ausfahren und auf Labormischwalzwerk Fell bilden |
| | (Durchmesser 200 mm, Länge 450 mm, Durchflußtemperatur 50°C) |
| | |
| | Homogenisieren: |
| | 3* links, 3* rechts einschneiden und umklappen sowie |
| | 8* bei weitem Walzenspalt (1 mm) und 3* bei engem Walzenspalt (3,5 mm) stürzen Fell ausziehen. |
| | |
| Batch-Temp. | 85-95°C |

In Tabelle 3 sind die Methoden für die Gummitestung zusammengestellt.

**Tabelle 3**

| Physikalische Testung | Norm/ Bedingungen |
|---|---|
| ML 1+4, 100°C, 3. Stufe | DIN 53 523/3, ISO 667 |
| Mooney-Scorch, 130°C | DIN 53 523, ISO 667 |
| t5 und t10 Zeit [min] | |
| Vulkameterprüfung, 165°C | DIN 53 529/3, ISO 6502 |
| Dmax - Dmin [dNm] | |
| T10% und t90% [min] | |
| Zugversuch am Ring, 23°C | DIN 53 504, ISO 37 |
| Zugfestigkeit [MPa] | |
| Spannungswerte [MPa] | |
| Bruchdehnung [%] | |
| Shore-A-Härte, 23°C [SH] | DIN 53 505 |
| Viskoelastische Eigenschaften,0 und 60°C, 16 Hz, 50 N Vorkraft und 25 N Amplitudenkraft | DIN 53 513, ISO 2856 |
| Speichermodul E' [MPa] | |
| Verlustmodul E" [MPa] | |
| Verlustfaktor tan δ[] | |
| Ball Rebound, 23°C [%] | ASTM D 5308 |
| Goodrich-Flexometertest,0,250 inch Hub, 25 min, 23°C | DIN 53533, ASTM D 623 A |
| Kontakttemperatur [°C] | |
| Einstichtemperatur [°C] | |
| Permanent Set [%] | |
| DIN-Abrieb, 10 N Kraft [mm³] | DIN 53 516 |
| Dispersion [ ] | ISO/DIS 11345 |

Es wird die Referenzmischung (A) mit 6,4 phr Si 69 mit den erfindungsgemäßen Mischungen (B) bis (H) verglichen. Die Mengen an Si 216, MPTES und Schwefel sind in Tabelle 4 angegeben. Die Mischungen sind nach aufsteigendem Si 216 / MPTES Verhältnis sortiert.

Tabelle 4 zeigt die Ergebnisse der gummitechnischen Prüfung.

**Tabelle 4**

| | | (A) | (B) | (C) | (D) | (E) | (F) | (G) | (H) |
|---|---|---|---|---|---|---|---|---|---|
| Menge Si 216 | [phr] | --- | 0,78 | 1,60 | 2,80 | 2,80 | 4,82 | 4,00 | 2,80 |
| Menge MPTES | [phr] | --- | 2,20 | 3,20 | 3,88 | 2,20 | 2,20 | 1,20 | 0,52 |
| **Si 216 / MPTES** | [ ] | --- | 0,35 | 0,50 | 0,72 | 1,27 | 2,19 | 3,33 | 5,38 |
| Schwefeleinsatz | [phr] | 1,50 | 1,75 | 2,50 | 1,75 | 1,75 | 1,75 | 2,50 | 1,75 |
| | | | | | | | | | |

| **Rohmischung** | | **(A)** | **(B)** | **(C)** | **(D)** | **(E)** | **(F)** | **(G)** | **(H)** |
|---|---|---|---|---|---|---|---|---|---|
| ML(1+4) bei 100°C, | [ME] | 58 | 65 | 60 | 59 | 58 | 54 | 54 | 59 |
| Scorch-Zeit, t5 | [min] | 55 | 35 | 12 | 17 | 46 | 56 | 44 | 25 |
| Scorch-Zeit, t35 | [min] | >60 | >60 | 23 | >60 | >60 | >60 | >60 | 46 |
| Dmax-Dmin | [dNm] | 18,7 | 15,6 | 14,5 | 9,4 | 11,2 | 9,3 | 14,5 | 20,8 |
| t 10% | [min] | 1,6 | 1,2 | 1,1 | 1,0 | 1,7 | 2,0 | 2,5 | 1,1 |
| t 90% | [min] | 44,9 | 49,4 | 29,3 | 47,1 | 48,7 | 43,8 | 36,1 | 36,1 |
| t 80% - t 20% | [min] | 18,9 | 23,7 | 13,1 | 22,5 | 24,0 | 21,2 | 17,8 | 13,5 |
| | | | | | | | | | |

| **Vulkanisat** | | **(A)** | **(B)** | **(C)** | **(D)** | **(E)** | **(F)** | **(G)** | **(H)** |
|---|---|---|---|---|---|---|---|---|---|
| Zugfestigkeit | [MPa] | 15,6 | 9,1 | 13,4 | 15,1 | 14,6 | 14,8 | 15,8 | 15,5 |
| Spannungswert 100% | [MPa] | 1,6 | 1,6 | 2,0 | 1,3 | 1,5 | 1,2 | 1,5 | 1,4 |
| Spannungswert 300% | [MPa] | 8,2 | 7,9 | 13,3 | 7,6 | 8,7 | 6,8 | 9,0 | 6,1 |
| Spannungswert 300% / | [ ] | 5,0 | 5,0 | 6,5 | 5,7 | 5,8 | 5,7 | 5,9 | 4,5 |
| Bruchdehnung | [%] | 440 | 320 | 300 | 430 | 400 | 460 | 420 | 550 |
| Shore-A-Härte | [SH] | 62 | 59 | 60 | 51 | 55 | 51 | 56 | 62 |
| Ball-Rebound, 23°C | [%] | 32,2 | 37,0 | 37,3 | 41,2 | 39,9 | 43,0 | 37,6 | 33,7 |
| DIN-Abrieb | [mm³] | 77,8 | 69,7 | 61,2 | 62,9 | 64,6 | 77,6 | 84,7 | 107,8 |
| Dyn. Dehnmodul E', 0°C | [MPa] | 18,1 | 14,8 | 12,4 | 10,9 | 11,3 | 9,6 | 9,8 | 15,9 |
| Dyn. Dehnmodul E', | [MPa] | 7,7 | 7,0 | 6,4 | 5,7 | 6,1 | 5,3 | 5,5 | 7,0 |
| Dyn. Dehnmodul E'', | [MPa] | 8,6 | 6,6 | 5,6 | 4,3 | 4,4 | 3,6 | 3,8 | 7,1 |
| Dyn. Dehnmodul E'', | [MPa] | 1,0 | 0,9 | 0,6 | 0,8 | 0,9 | 0,6 | 0,7 | 0,9 |
| Verlustfaktor tan d, | [-] | 0,472 | 0,445 | 0,455 | 0,392 | 0,390 | 0,377 | 0,389 | 0,449 |
| Verlustfaktor tan d, | [-] | 0,132 | 0,124 | 0,097 | 0,144 | 0,145 | 0,118 | 0,136 | 0,132 |
| Dispersion | [-] | 9 | 9 | 9 | 8 | 9 | 9 | 9 | 9 |

Die Mischungen(A), (C), (D), (F), (G), (H) wurden je 45 Minuten und die Mischungen (B), (E) je 60 Minuten bei 165°C vulkanisiert.

Die Daten in Tabelle 4 zeigen, dass bei Si 216 / MPTES Verhältnissen < 1 die Scorch-Zeiten (Anvulkanisationszeiten t5 und t 10%) zu gering sind, um eine sichere Verarbeitung zu gewährleisten (Mischungen (B) bis (D)). Bei zu hohen Si 216 / MPTES Verhältnisses dagegen nimmt die Kautschuk-Füllstoff-Kopplungsausbeute deutlich ab, was sich in einer Verschlechterung der statischen Daten, wie Spannungswerte und DIN-Abrieb, äußert ((G) und (H)). Die besten Gummidaten werden bei den Mischungen (E) und (F) erhalten, die unter anderem niedrige Mischungsviskositäten, lange Anvulkanisationszeiten, hohe Spannungswerte, niedrige DIN-Abriebswerte und niedrige Verlustfaktoren tan δ (60°C) besitzen.

### Beispiel 2

Es wird die Leistungsfähigkeit von Gummimischungen mit einem Si 216 / MPTES Verhältnis von 1,5 bis 2,7 gezeigt und verifiziert so die Aussagen in Beispiel 1. Die Rezeptur und Mischvorschrift entspricht denen in Tabellen 1 und 2. In der Referenzmischung (I) werden 6,4 phr Si 69 und 1,5 phr Schwefel eingesetzt. Die Silan- und Schwefelmengen der Mischungen (J) bis (M) sind in Tabelle 5, ebenso wie das technische Gummiwertebild, dargestellt.

Die Mischungen werden je 45 Minuten bei 165°C vulkanisiert.

**Tabelle 5**

| | | **(I)** | **(J)** | **(K)** | **(L)** | **(M)** |
|---|---|---|---|---|---|---|
| Si 216 | [phr] | --- | 2,4 | 4,0 | 4 | 4,0 |
| MPTES | [phr] | --- | 1,6 | 2,24 | 1,8 | 1,48 |
| **Si 216 / MPTES** | [ ] | --- | **1,5** | **1,8** | **2,2** | **2,7** |
| Schwefel | [phr] | 1.5 | 2.3 | 2.9 | 2.6 | 2.5 |
| | | | | | | |

| **Rohmischung** | | **(I)** | **(J)** | **(K)** | **(L)** | **(M)** |
|---|---|---|---|---|---|---|
| ML(1+4) | [ME] | 63 | 61 | 55 | 54 | 55 |
| Scorch-Zeit, t5 | [min] | 41 | 23 | 23 | 23 | 27 |
| Scorch-Zeit, t35 | [min] | >60 | >60 | 59 | 48 | 59 |
| Dmax-Dmin | [dNm] | 18,5 | 16,5 | 17,4 | 13,4 | 15,0 |
| t 10% | [min] | 1,8 | 1,6 | 2,0 | 2,1 | 2,4 |
| t 90% | [min] | 51,9 | 33,2 | 27,6 | 25,9 | 28,4 |
| | | | | | | |

| **Vulkanisat** | | **(I)** | **(J)** | **(K)** | **(L)** | **(M)** |
|---|---|---|---|---|---|---|
| Zugfestigkeit | [MPa] | 12,1 | 13,6 | 11,2 | 13,9 | 12,5 |
| Spannungswert 100% | [MPa] | 1,7 | 1,8 | 1,9 | 1,7 | 1,7 |
| Spannungswert 300% | [MPa] | 8,0 | 9,9 | 10,6 | 10,4 | 9,3 |
| Spannungswert 300%/100% | [MPa] | 4,7 | 5,5 | 5,6 | 6,2 | 5,5 |
| Bruchdehnung | [%] | 380 | 360 | 310 | 350 | 360 |
| Shore-A-Härte | [SH] | 64 | 61 | 60 | 56 | 59 |
| Ball-Rebound, 23°C | [%] | 31,0 | 36,1 | 33,8 | 36,4 | 34,7 |
| DIN-Abrieb | [mm³] | 76 | 75 | 90 | 82 | 89 |
| E', 0°C | [MPa] | 22,0 | 12,2 | 12,7 | 11,2 | 12,6 |
| E', 60°C | [MPa] | 7,9 | 6,4 | 6,7 | 6,1 | 6,3 |
| E", 0°C | [MPa] | 10,3 | 5,2 | 5,8 | 4,9 | 5,5 |
| E", 60°C | [MPa] | 1,1 | 0,7 | 0,6 | 0,5 | 0,6 |
| tan d, 0°C | [-] | 0,470 | 0,428 | 0,458 | 0,433 | 0,440 |
| tan d, 60°C | [-] | 0,141 | 0,104 | 0,086 | 0,086 | 0,100 |
| Dispersion | [-] | 8 | 8 | 8 | 8 | 8 |

Die Daten in Tabelle 5 zeigen, dass bei Si 216 / MPTES Verhältnissen von 1,5 bis 2,7, Mischungen (J) bis (M), herausragende gummitechnische Eigenschaften gefunden werden. Die niedrigen Mischungsviskositäten und langen Anvulkanisationszeiten gewährleisten eine gute Verarbeitbarkeit der Mischung. Die hohen Spannungswerte und insbesondere der hohe Verstärkungsfaktor 300%/100% spricht für eine sehr hohe Füllstoff-Kautschuk-Kopplungsausbeute. Die DIN-Abriebswerte liegen günstig und starke Vorteile sind in den niedrigen Verlustfaktoren tan δ (60°C) zu sehen, die mit dem Rollwiderstand einer Reifenlauffläche korrelieren. Die niedrigen Mischungsviskositäten, Shore-A-Härten und tan δ (60°C) Werte der Mischungen (K) bis (M) lassen sogar noch Spielraum für eine weitere Füllstofferhöhung, was zu einer Verbesserung der Naßrutschfestigkeit führen kann.

### Beispiel 3

Es wird die Referenzmischung (N) mit 4,8 phr Si 69 und 0,65 phr Schwefel mit den Mischungen (O) bis (Q), die MPTMS (Mercaptopropyltrimethoxysilan) und MTMS (Methyltrimethoxysilan), Si 203 oder Si 216 enthalten, verglichen. Die Rezeptur ist in Tabelle 6 gezeigt. Die Mischanweisung ist analog zu der in Tabelle 2, mit dem Unterschied, dass das Vulkanisationssystem der 3. Stufe auf der Walze kalt eingemischt wird.

**Tabelle 6**

| Substanz | Bsp. [phr] |
|---|---|
| **1. Stufe** | |
| Krylene 1500 | 100 |
| Hisil 233 | 60 |
| Stearinsäure | 1 |
| Renopal NS | 15 |
| Vulkanox HS/LG | 1,5 |
| Silane gemäß Bsp. | Variabel |
| **2. Stufe** | |
| Batch Stufe 1 | |
| **3. Stufe** | |
| Batch Stufe 2 | |
| ZnO | 4 |
| Vulkacit CZ | 1 |
| Vulkacit Thiuram C | 0,75 |
| Schwefel | Variabel |

Krylene 1500 ist ein Emulsions-SBR mit 23,5 % Styroleinheiten und einer Mooney-Viskosität von 50±5 der Bayer AG. Bei Hisil 233 der PPG Industries handelt es sich um eine gefällte Kieselsäure mit einer BET Oberfläche von 155 m²/g. Renopal NS ist ein Weichmacher der Fuchs Mineralöl-Werke Eschweiler. Vulkanox HS/LG ist das Alterungsschutzmittel TMQ der Bayer AG. Vulkacit Thiuram C ist der Beschleuniger TMTD der Bayer AG.

MPTMS und MTMS werden von Gelest/ABCR vertrieben. Si 203 ist ein Handelsprodukt der Degussa-Hüls AG.

Die Silan- und Schwefelmengen der Mischungen (O) bis (Q) sind in Tabelle 7, ebenso das technische Gummiwertebild, gezeigt. Die Mischungen werden jeweils 25 Minuten bei 165°C vulkanisiert. Die Mengen an Alkylsilanen sind equimolar bezogen auf die Si-Einheit.

**Tabelle 7**

| | | **(N)** | **(O)** | **(P)** | **(Q)** |
|---|---|---|---|---|---|
| Alkylsilan | | --- | MTMS | Si 203 | Si 216 |
| Menge Alkylsilan | [phr] | --- | 0,75 | 2,08 | 3,92 |
| Menge MPTMS | [phr] | --- | 0,75 | 0,75 | 0,75 |
| Schwefeleinsatz | [phr] | 0.65 | 2.5 | 1.75 | 1,75 |
| | | | | | |

| **Rohmischung** | | **(N)** | **(O)** | **(P)** | **(Q)** |
|---|---|---|---|---|---|
| Scorch-Zeit, t5 | [min] | 11 | 20 | 16 | 17 |
| Scorch-Zeit, t35 | [min] | 15 | 29 | 21 | 22 |
| ML (1+4) | [ME] | 75 | 91 | 73 | 63 |
| Dmax-Dmin | [dNm] | 14,6 | 41,3 | 17,9 | 15,8 |
| t 10% | [min] | 2,9 | 5,6 | 4,0 | 4,3 |
| t 90% | [min] | 14,6 | 15,8 | 13,9 | 13,6 |
| | | | | | |

| **Vulkanisat** | Einheit: | **(N)** | **(O)** | **(P)** | **(Q)** |
|---|---|---|---|---|---|
| Zugfestigkeit | [MPa] | 22,7 | 8,2 | 17,3 | 18,3 |
| Spannungswert 100% | [MPa] | 1,9 | 1,7 | 1,9 | 2 |
| Spannungswert 300% | [MPa] | 9,3 | 7,7 | 8,8 | 9,7 |
| Spannungswert 300/10 | [-] | 4,9 | 4,5 | 4,6 | 4,9 |
| Bruchdehnung | [%] | 540 | 310 | 470 | 450 |
| Shore-A-Härte | [SH] | 62 | 67 | 64 | 61 |
| Ball-Rebound (23°C) | [%] | 54,2 | 52.5 | 52,2 | 56,1 |
| DIN-Abrieb | [mm³] | 80 | 100 | 96 | 99 |
| Kontakttemperatur | [°C] | 25 | 34 | 24 | 19 |
| Einstichtemperatur | [°C] | 64 | 80 | 59 | 48 |
| Permanent Set | [%] | 6,6 | 9,9 | 5,0 | 7,9 |
| E' (0°C) | [MPa] | 13,0 | 17,9 | 13,2 | 10,3 |
| E' (60°C) | [MPa] | 8,8 | 11,0 | 9,1 | 7,7 |
| E' (0°C) | [MPa] | 3,0 | 4,5 | 3,2 | 2,1 |
| E' (60°C) | [MPa] | 1,0 | 1,8 | 1,2 | 0,7 |
| tan d (0°C) | [-] | 0,232 | 0,252 | 0,246 | 0,206 |
| tan d (60°C) | [-] | 0,119 | 0,159 | 0,131 | 0,096 |

Wie man anhand Tabelle 7 sieht, zeigt die Mischung (O) mit dem kurzkettigen Alkylsilan MTMS eine deutlich höhere Mooney-Viskosität und verschlechterte Vulkanisatdaten als die Referenzmischung (N). Auch Mischung (P) mit Si 203 fällt gegenüber Mischung (N) ab (niedrigeres Verstärkungsverhältnis 300%/100% und ein höherer tan δ (60°C) Wert). Demgegenüber zeichnet sich Mischung (Q) mit dem langkettigen Alkylsilan Si 216 durch ein sehr gutes Eigenschaftsbild aus. Gegenüber der Referenzmischung ist die Viskosität niedrig und die Vulkanisatdaten, insbesondere der niedrige tan δ (60°C) Wert, leicht überlegen.

In den Beispielen 1 und 2 wird gezeigt, dass mit Mischungsverhältnissen von Si 216 / MPTES im Bereich von 1 bis 3 sehr gute gummitechnische Daten erhalten werden. In Beispiel 3 wird gezeigt, dass mit der Verwendung von kurzkettigeren Alkylsilanen wie Methyltrimethoxysilan (MTMS) oder Propyltriethoxysilan (Si 203) anstatt des langkettigen Si 216 keine zufriedenstellenden Ergebnisse erhalten werden.

### Beispiel 4

In Beispiel 4 wird gezeigt, daß Kautschukmischungen mit einem Si 216 / MPTES Verhältnis von 0.5 bis 1, aber mit einer auf den Füllstoffgehalt optimierten Menge an MPTES, zwar die in Beispiel 1 dargelegten Schwächen in der Scorchsicherheit besitzen, dafür aber herrausragende statische und dynamische Gummidaten aufweisen.

Die Rezeptur und Mischvorschrift entspricht denen in Tabelle 1 und 2. In der Referenzmischung (R) werden 6,4 phr Si 69 und 1,5 phr Schwefel eingesetzt. Die Menge an MPTES in der erfindungsgemäßen Mischung (S) ist 2,4 phr, die von Si 216 1,6 phr und die Schwefelmenge beträgt 2,3 phr. Dies entspricht einem Si 216 / MPTES-Verhältnis von 0,66. In Tabelle 8 sind die gummitechnischen Daten gezeigt. Zusätzlich zu den in Tabelle 3 aufgeführten Prüfungen werden die viskoelastischen (dynamischen) Eigenschaften auch bei -20°C bestimmt.

Die Mischungen werden jeweils 20 Minuten bei 165°C vulkanisiert.

**Tabelle 8**

| **Rohmischungen** | | **(R)** | **(S)** |
|---|---|---|---|
| ML (1+4) | [ME] | 60 | 61 |
| Scorch-Zeit, t5 | [min] | 33,45 | 13,35 |
| Scorch-Zeit, t35 | [min] | >60 | 22,1 |
| Dmax-Dmin | [dNm] | 16,4 | 13,4 |
| t 10 % | [min] | 2,0 | 1,2 |
| t 90 % | [min] | 15,8 | 19,7 |
| | | | |

| | | **(R)** | **(S)** |
|---|---|---|---|
| Zugfestigkeit | [MPa] | 13,4 | 15,2 |
| Spannungswert 100 % | [MPa] | 1,6 | 1,5 |
| Spannungswert 300 % | [MPa] | 8,2 | 9,0 |
| Spannungswert 300%/100% | [-] | 5,1 | 6,0 |
| Bruchdehnung | [%] | 400 | 400 |
| Shore-A-Härte | [SH] | 60 | 55 |
| Ball-Rebound, 23 °C | [%] | 33,7 | 39,2 |
| DIN-Abrieb | [mm³] | 82 | 67 |
| E', -20°C | [MPa] | 78,3 | 48,8 |
| E', 0°C | [MPa] | 12,9 | 10,0 |
| E', 60°C | [MPa] | 6,5 | 6,0 |
| E'', -20°C | [MPa] | 56,6 | 44,2 |
| E'', 0°C | [MPa] | 6,0 | 4,1 |
| E'', 60°C | [MPa] | 0,8 | 0,6 |
| tan δ, -20°C | [-] | 0,724 | 0,906 |
| tan δ, 0°C | [-] | 0,463 | 0,461 |
| tan δ, 60°C | [-] | 0,129 | 0,099 |
| Dispersion | [-] | 7 | 8 |

Wie man anhand der Daten in Tabelle 8 eindeutig sieht, zeigt Mischung (S) deutlich kürzere Scorch-Zeiten (t 10%, Mooney-Scorch), als die Referenzmischung mit Si 69. Die erfindungsgemäße Mischung (S) zeichnet sich durch vorteilhafte höhere Spannungswerte, einen höheren Verstärkungsfaktor Spannungswert 300%/100% und niedrigeren DIN-Abrieb aus. Zudem ist der tan δ bei 60°C, der mit dem Rollwiderstand korreliert, deutlich abgesenkt (verbesserter Rollwiderstand). Zudem weist der stark erniedrigte Speichermodul E' bei -20°C auf eine verbesserte Eishaftung, wie sie insbesondere für Winterreifen gefordert wird, hin.

## Patentansprüche

1. Kautschukmischungen, **dadurch gekennzeichnet, daß** diese enthalten
(a) einen Kautschuk oder eine Mischung von Kautschuken,
(b) einen silikatischen Füllstoff,
(c) ein Organosilan der allgemeinen Formel (I)
R¹R²R³Si-R⁴-SH (I)
wobei R¹, R², R³ Ethoxygruppen sind,
R⁴ eine Propylgruppe ist,
und
(d) ein Alkylsilan der allgemeinen Formel (II)
R¹R²R³Si-R⁵ (II)
wobei R¹, R², R³ die Bedeutung wie in Formel I haben,
R⁵ eine Hexadecylgruppe ist,
und das Mengenverhältnis Alkylsilan der allgemeinen Formel (II) zu Organosilan der allgemeinen Formel (I) 1,5-2,7 ist.

2. Kautschukmischungen nach Anspruch 1,
**dadurch gekennzeichnet,**
**dass** das Organosilan der Formel I in einer Menge von 1 bis 4 Gew.-% und das Alkylsilan gemäß Formel II in einer Menge von 1 bis 6 Gew.-%, bezogen auf die Menge des eingesetzten Füllstoffs, eingesetzt werden.

3. Verfahren zur Herstellung von Kautschukmischungen nach Anspruch 1,
**dadurch gekennzeichnet,**
**dass** man den Kautschuk oder die Mischung von Kautschuken, die Silane gemäß den Formeln I und II und den silikatischen Füllstoff in einem Mischaggregat mischt und die Silane gemäß den Formeln I und II zusammen oder getrennt nacheinander zugibt.

4. Verwendung der Kautschukmischung gemäß Anspruch 1 in Formkörper.

5. Verwendung der Kautschukmischung gemäß Anspruch 1 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

6. Formkörper, erhältlich aus einer Kautschukmischung nach Anspruch 1, durch Vulkanisation.

7. Formkörper gemäß Anspruch 6,
**dadurch gekennzeichnet,**
**dass** es sich um einen Luftreifen handelt.

8. Formkörper gemäß Anspruch 6,
**dadurch gekennzeichnet,**
**dass** es sich um eine Reifenlauffläche handelt.

## Claims

1. Rubber mixtures, **characterized in that** these comprise
(a) a rubber or a mixture of rubbers,
(b) a silicatic filler,
(c) an organosilane of the general formula (I)
R¹R²R³Si-R⁴-SH (I)
wherein R¹, R², R³ are ethoxy groups
R⁴ is a propyl group
and
(d) an alkylsilane of the general formula (II)
R¹R²R³Si-R⁵ (II)
wherein R¹, R², R³ have the meaning as in formula I,
R⁵ is a hexadecyl group
and the ratio of the amount of alkylsilane of the general formula (II) to that of organosilane of the general formula (I) is 1.5 - 2.7.

2. Rubber mixtures according to claim 1,
**characterized in that**
the organosilane of the formula I is employed in an amount of 1 to 4 wt.% and the alkylsilane according to formula II is employed in an amount of 1 to 6 wt.%, based on the amount of filler employed.

3. Process for the preparation of rubber mixtures according to claim 1,
**characterized in that**
the rubber or the mixture of rubbers, the silanes according to the formulae I and II and the silicatic filler are mixed in a mixing unit and the silanes according to the formulae I and II are added together or separately in succession.

4. Use of the rubber mixture according to claim 1 in shaped articles.

5. Use of the rubber mixture according to claim 1 in pneumatic tyres, tyre treads, cable sheathings, hoses, drive belts, conveyor belts, roller coverings, tyres, shoe soles, sealing rings and damping elements.

6. Shaped articles obtainable from a rubber mixture according to claim 1 by vulcanization.

7. Shaped article according to claim 6,
**characterized in that**
it is a pneumatic tyre.

8. Shaped article according to claim 6,
**characterized in that**
it is a tyre tread.

## Revendications

1. Mélanges de caoutchoucs,
**caractérisés en ce qu'**
ils contiennent
(a) un caoutchouc ou un mélange de caoutchoucs,
(b) une charge de silicate, et
(c) un organosilane de formule générale (I)
R¹R²R³Si-R⁴-S-H (I)
dans laquelle
R¹, R² et R³ sont des groupes éthoxy, R⁴ est un groupe propyle et
(d) un alkylsilane de formule générale (II)
R¹R²R³Si-R⁵ (II)
dans laquelle R¹, R² et R³ ont la signification de la formule I, R⁵ est un groupe hexadécyle,
et le rapport quantitatif alkylsilane de formule générale (II) à organosilane de formule générale (I) va de 1,5 à 2,7.

2. Mélanges de caoutchoucs selon la revendication 1,
**caractérisés en ce qu'**
on utilise l'organosilane de formule I en quantité de 1 à 4 % en poids et l'alkylsilane de formule II en quantité de 1 à 6 % en poids, rapporté à la quantité de charge utilisée.

3. Procédé de préparation de mélanges de caoutchoucs selon la revendication 1,
**caractérisé en ce qu'**
on mélange le caoutchouc ou le mélange de caoutchoucs, les silanes selon les formules I et II et la charge de silicate dans un appareil de mélange, et on ajoute les silanes selon les formules I et II ensemble ou séparément l'un après l'autre.

4. Utilisation du mélange de caoutchoucs selon la revendication 1, sous forme de corps moulé.

5. Utilisation du mélange de caoutchoucs selon la revendication 1 dans des pneumatiques, des chapes de pneus, des gaines de câble, des tuyaux, des courroies d'entraînement, des transporteurs à courroie, des garnitures de rouleaux, des pneus, des semelles de chaussures, des bagues d'étanchéité et des éléments d'étanchéité.

6. Corps moulé obtenu à partir d'un mélange de caoutchoucs selon la revendication 1 par vulcanisation.

7. Corps moulé selon la revendication 6,
**caractérisé en ce qu'**
il s'agit d'un pneumatique.

8. Corps moulé selon la revendication 6,
**caractérisé en ce qu'**
il s'agit d'une chape de pneu.
